# EUROPÄISCHE PATENTSCHRIFT

(11) **EP 0 773 893 B1**
(45) Veröffentlichungstag und Bekanntmachung des Hinweises auf die Patenterteilung: **03.04.2002**
(21) Anmeldenummer: 96916026.6
(22) Anmeldetag: 08.05.1996
(51) Int. Cl.: B65D 75/58, B65D 81/32, B29C 65/02

(54) **KUNSTSTOFF-AUSGIESS-EINSCHWEISSTEIL**
PLASTIC WELDED POURER COMPONENT
COMPOSANT VERSEUR SOUDE A UNE MATIERE PLASTIQUE

(30) Priorität: 02.06.1995 DE 29509118 U
(43) Veröffentlichungstag der Anmeldung: 21.05.1997
(73) Patentinhaber: Georg Menshen GmbH + Co. KG, D-57413 Finnentrop (DE)
(72) Erfinder: HINS, Johannes, D-59846 Sundern (DE)
(74) Vertreter: Schmidt, Horst, Dr.
(86) Internationale Anmeldenummer: EP9601931
(87) Internationale Veröffentlichungsnummer: WO9638349

(56) Entgegenhaltungen:
- EP-A- 0 661 208
- WO-A-94/19251
- CH-A- 677 093
- CH-A- 680 358
- DE-A- 1 432 159
- DE-A- 4 217 727
- FR-A- 1 367 404
- FR-A- 2 697 811
- US-A- 3 690 524

## Beschreibung

Die Erfindung betrifft ein Ausgiess-Einschweissteil aus einem Kunstoffmaterial zum Schweissverbinden mit einem Kunststoff-Behälterteil und inbesondere ein Einschweissteil zur Verbindung mit einem Behälterteil in Gestalt eines Nachfüllbeutels aus einem folienartigen Kunststoffmaterial für die Bevorratung von z.B. flüssigen oder pastösen Reinigungsmitteln.

Da das Ausgiess-Einschweissteil ein formstabiles Kunststoff-Formteil ist, können wegen der Nachgiebigkeit des Folienmaterials des Behälterteiles Schwierigkeiten beim Verschweissen der unterschiedlichen Kunststoffmaterialien auftreten, indem das Folienmaterial dazu neigt, längs der Schweisszone infolge Überhitzung und dgl. aufzureissen. Daher ist es grundsätzlich erwünscht, aus Gründen eines guten Wärmetransportes bzw. zur Vermeidung von Überhitzungen die am Einschweissteil vorzusehenden Anschweissrippen möglichst dünnwandig auszubilden. Dünnwandige Anschweissrippen können jedoch kerbempfindliche Schweisszonen am Folienmaterial schaffen. Es wurde daher schon vorgeschlagen, das Schweissen vor einer Hintergrundwand des Einschweissteiles vorzunehmen, so dass sich das Folienmaterial beim Schweissvorgang an der Hintergrundwand anlegen und abstützen kann. Nachteil dieser Massnahme ist die verschlechterte Abfuhr von Wärme aus der Schweisszone und damit die Gefahr einer Überhitzung des Folienmaterials. Auch wurde schon vorgeschlagen (CH-A-680358), einen relativ dickwandigen Basisteil einer Anschweissrippe am äusseren Umfang über eine kurze radiale Strecke spitz zulaufen zu lassen, um eine Art Schweissgrat zu erhalten. Die Kerbempfindlichkeit an der Schweissstelle kann hierdurch ggf. sogar verstärkt werden.

Der Erfindung liegt die Aufgabe zugrunde, ein Kunststoff-Ausgiess-Einschweissteil der eingangs erwähnten Art zu schaffen, das sich preisgünstig herstellen und problemfrei verarbeiten lässt. Insbesondere soll ein Einreissen des Folienmaterials beim Schweissen und bei der späteren Verwendung vermieden werden.

Diese Aufgabe wird durch die Merkmale im kennzeichnenden Teil des Patentanspruches 1 gelöst.

Jede Anschweissrippe weist demnach einen relativ dickwandigen Rippenbasisbereich mit einem abgerundeten äusseren Umfangsrand auf, auf dem ein schmaler dünnwandiger Schweissteg oder -grat angeformt ist, dessen äussere Umfangskante die Anschweisskante bildet. Wegen der Dünnwandigkeit des Schweissgrates können die Temperaturen der anzuschweissenden Folie während des Schweissvorganges ohne weiteres auf einem solchen Niveau gehalten werden, dass ein Überhitzen des Folienmateriales wirksam vermieden wird. Es wird eine feste Schweissverbindung erhalten, da der Schweissvorgang so gesteuert werden kann, dass der Schweissgrat beim Schweissen weitgehend aufschmilzt, so dass er praktisch verschwindet und damit das Folienmaterial in eine abstützende Berührung mit dem abgerundeten relativ breiten äusseren Umfangsrand des Rippenbasisbereiches gelangt. Dadurch können die beim Schweissen und bei der späteren Verwendung auftretenden Kräfte zwischen dem Einschweissteil und dem Folienbeutel weitestgehend kerbeffektfrei an der Schweisszone übertragen werden. Mit überraschend einfachen Mitteln ist demnach durch die Erfindung eine wirksame Massnahme gegen ein Einreissen des Folienmaterials geschaffen worden. Da der Rippenbasisbereich des Einschweissteiles am Schweissvorgang nicht oder nur indirekt beteiligt ist, kann er hinsichtlich eines guten Transportes von Wärme aus der Schweisszone optimiert werden, was eine weitere wirksame Massnahme gegen Rissbildung im Bereich der Schweisszone darstellt. Insbesondere kann jede Anschweissrippe nach Art einer Kühlrippe mit einer grossen wärmeableitenden Oberfläche versehen sein. Dabei kann zur Erhöhung der Stabilität eine dünnwandige Trennwand zwischen benachbarten Anschweissrippen vorgesehen sein, die so die radiale und axiale gegenseitige Position der Anschweissrippen fixiert. Das Ausgiess-Einschweissteil nach der Erfindung kann ferner längs einer axialen Ebene, insbesondere axialen Mittelebene, geteilt sein, wobei jedes Teilstück eine Ausgiesspassage aufweist. Jedes Teilstück kann mit einem separaten Behälterteil verschweisst werden, und die beiden Teilstücke können dann miteinander verbunden werden, so dass sich eine äussere Konfiguration ergibt, die derjenigen eines einteiligen Ausgiess-Einschweissteil nach der Erfindung entspricht.

Die Erfindung wird nachfolgend anhand von Ausführungsform und der Zeichnung näher erläutert. Es zeigen:
Fig. 1 in Gesamtansicht (linke Hälfte) und längsgeschnittener Ansicht (rechte Hälfte) ein erfindungsgemäss aufgebautes Ausgiess-Einschweissteil,
Fig. 2 in Darstellungen ähnlich Fig. 1 das Ausgiess-Einschweissteil in Seitenansicht,
Fig. 3 das Ausgiess-Einschweissteil nach Fig. 1 in Draufsicht,
Fig. 4 in Draufsicht ein Ausgiess-Einschweissteil gemäss einer anderen Ausführungsform der Erfindung,
Fig. 5 in einer teilweise geschnittenen Seitenansicht das Ausgiess-Einschweissteil nach Fig. 4, und
Fig. 6 das Ausgiess-Einschweissteil nach Fig. 4 in Ansicht von unten.

Das Ausgiess-Einschweissteil gemäss einer bevorzugten Ausführungsform der Erfindung ist ein integral geformter Körper aus einem formstabilen Kunststoffmaterial, wie Polyäthylen oder Polypropylen, der in eine schlitzförmige Öffnung eines (nicht gezeigten) vorgefertigten Behälterteiles eingesetzt und damit permanent durch Schweissen, z.B. Ultraschallschweissen, verbunden werden kann. Insbesondere kann der Behälterteil aus einem folienartigen Kunststoffmaterial bestehen, wie es für Nachfüllbeutel für die Bevorratung z.B. flüssiger oder pastöser Reinigungsmittel oder dgl. zur Abfallminimierung zunehmend verwendet wird. Obschon die permanente Verbindung zwischen Ausgiess-Einschweissteil und Behälterteil im allgemeinen durch Schweissen erfolgt, kann sie auch durch andere Wärmebehandlungsverfahren, wie Heisssiegeln, oder durch Kleben hergestellt werden. Es versteht sich, dass die Erfindung weder auf die beschriebenen Kunststoffmaterialien noch auf den genannten Anwendungszweck beschränkt ist, sondern analog in ähnlich vorteilhafter Weise auch zur Anwendung kommen kann, wenn es gewünscht ist, ein flexibles Kunststoffmaterial im wesentlichen linienförmig mit einem formstabilen Kunststoffmaterial zu verbinden.

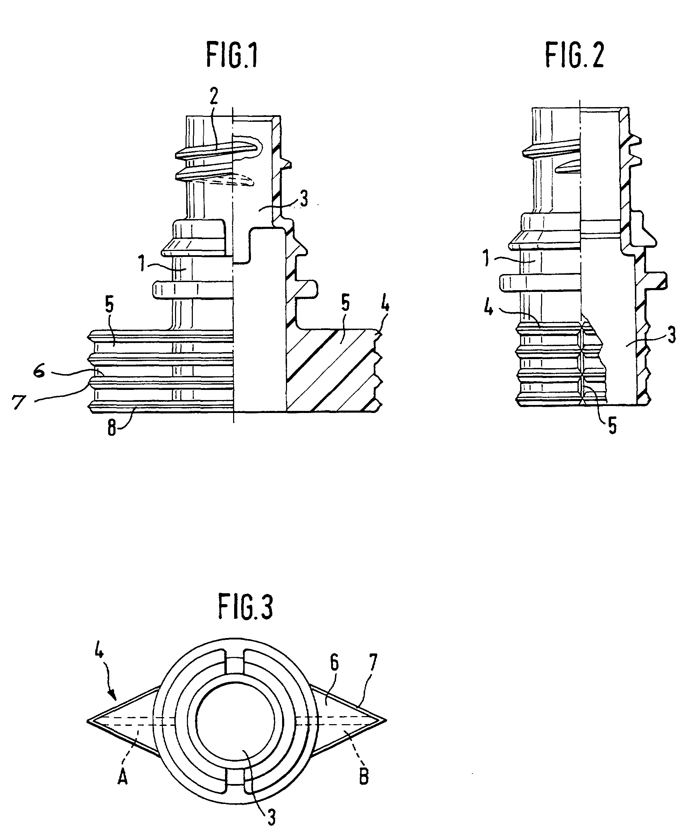

Der Ausgiess-Einschweissteil umfasst gemäss Fig. 1 bis 3, die eine erste Ausführungsform der Erfindung zeigen, einen im wesentlichen rohrförmigen Halsbereich 1 mit einer geeigneten axialen Erstreckung, der von einer Durchgangspassage 3 axial durchsetzt ist. Die Durchgangspassage 3 schafft die Verbindung zwischen dem Inneren des (nicht gezeigten) Behälterteiles und der Aussenumgebung, wenn der Ausgiess-Einschweissteil mit dem Behälterteil verbunden ist.

An einem äusseren Umfangsabschnitt nahe einem axialen Ende des Halsbereiches 1 kann ein Gewinde 2 angeformt sein, auf das eine (nicht gezeigte) Schraubverschlusskappe zum Verschliessen der Durchgangspassage 3 aufgeschraubt werden kann. Anstelle eines Schraubgewindes 2 könnte auch ein Hintergreifbund am Halsbereich 1 vorgesehen sein, um eine Verschlusskappe durch Aufprellen am Ausgiess-Einschweissteil formschlüssig zu befestigen.

Längs eines Abschnittes des Halsbereiches 1 nahe seinem andeien axialen Ende sind ein oder mehrere, bei der vorliegenden Ausführungsform vier, Anschweissrippen 4 in axialem Abstand parallel zueinander angeformt. Jede Anschweissrippe 4 liegt in einer radialen Ebene zur Mittellängsachse des Ausgiess-Einschweissteiles und umfasst einen relativ dickwandigen Rippenbasisbereich 6 sowie einen auf dessen äusserer Umfangskante oder -rand angeformten Schweissgrat 7, der ebenfalls in der radialen Ebene des dickwandigen Rippenbasisbereiches 6 liegt.

Der Schweissgrat 7 hat eine wesentlich geringere Abmessung sowohl in radialer als auch axialer Richtung als die des Rippenbasisbereiches 6. Insbesondere hat der Schweissgrat 7 eine geringere Dicke als die des Rippenbasisbereiches 6. Es wurde festgestellt, dass die Dicke des Schweissgrates 7 zu der des Rippenbasisbereiches 6 zwischen 1:10 und 1:3, vorzugsweise bei etwa 1:5, liegen sollte, um Kerbeffekte und Rissbildung beim Schweissvorgang wirksam zu vermeiden.

Die freie Stirnfläche des Schweissgrates 7 bildet eine umfänglich der gesamten Anschweissrippe 4 sich erstreckende Anschweisskante 8. Während die äussere Umfangskante des Rippenbasisbereiches 6 abgerundet sein sollte, ist die Anschweisskante 8 vorzugsweise flach oder spitz nach aussen zulaufend, z.B. dachförmig, ausgebildet.

Der Schweissgrat 7 kann längs seiner gesamten umfänglichen Erstreckungslänge gleiche Abmessungen aufweisen. Dagegen kann der Rippenbasisbereich 6 jeder Anschweissrippe 4, wie insbesondere aus Fig. 3 zu entnehmen ist, ein Paar diametral in Bezug auf den Halsbereich 1 des Einschweissteiles gegenüberliegende, in einer radialen Ebene keilförmig nach aussen sich verjüngende Abschnitte A, B umfassen, die mit ihren äusseren Umfängen tangential in den Halsbereich 1 übergehen und einen kontinuierlichen kerbeffektminimierenden Übergang für einen anzuschweissenden Folienbeutel schaffen, wenn des Einschweissteil in eine schlitzförmige Öffnung im Folienbeutel eingesetzt wird.

Eine in einer axialen Mittelebene liegende Trennwand 5, vgl. Fig. 1, steht radial von diametralen Stellen des Halsbereiches 1 nach aussen ab und durchsetzt mittig die keilförmig verlaufenden Abschnitte A, B jeder Anschweissrippe 4. Die Trennwand 5 bildet eine Stützwand zwischen benachbarten Anschweissrippen 4, die bewirkt, dass diese die vorgegebene radiale und axiale Lage in Bezug auf den Halsbereich 1 unter den beim Schweissvorgang oder der späteren Verwendung auftretenden Beanspruchungen beibehalten. Infolge der stabilisierenden Wirkung der Trennwand 5 kann die Dicke des Rippenbasisbereiches 6 auf eine optimale Wärmeabfuhr aus der Schweisszone bei gleichzeitig guter abstützender Eigenschaft für das anzuschweissende Folienmaterial dimensioniert werden. Die Trennwand 5 hat vorzugsweise eine geringe Dicke, so dass sie die freiliegenden Oberfläche der Anschweissrippen 4 nur unwesentlich reduziert und daher der Wärmetransport durch die Anschweissrippen 4 hierdurch praktisch nicht beeinträchtigt wird.

Bei der vorbeschriebenen Ausführungsform der Erfindung endet die Trennwand 5 in einem radialen Abstand vom Halsbereich 1, der nur wenig kürzer als der des Rippenbasisbereiches 6 jeder Anschweissrippe 4 ist, vgl. Fig. 1. Wenn erwünscht, könnte die Trennwand auch radial über die Anschweissrippen 4 nach aussen um eine geeignete kurze Wegstrecke verlängert sein, um das anzuschweissende Folienmaterial abzustützen, bevor es im Bereich der Anschweissrippen 4 gespreizt wird. Ferner kann der nach aussen vorstehende Abschnitt der Trennwand eine geringere Dicke als die des innerhalb der Anschweissrippen liegenden Abschnittes haben.

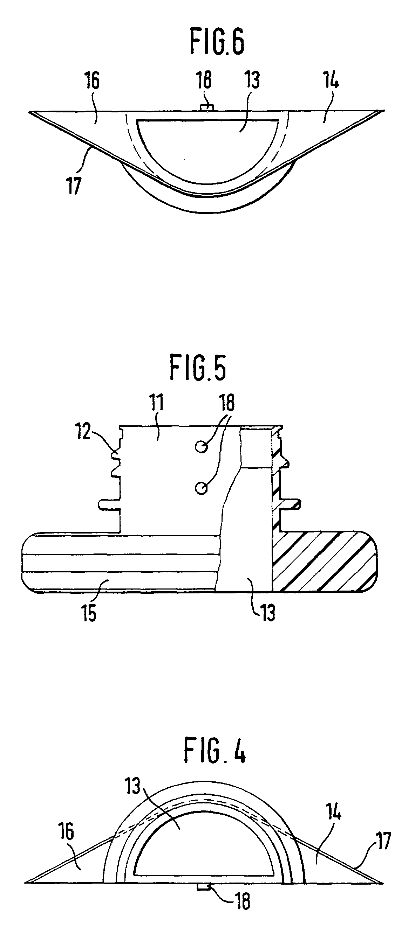

Eine weitere Ausführungsform eines Kunststoff-Ausgiess-Einschweissteiles nach der Erfindung ist in Fig. 4 bis 6 gezeigt. Diese Ausführungform unterscheidet sich von der vorbeschriebenen und in Fig. 1 bis 3 gezeigten im wesentlichen dadurch, dass der Einschweissteil längs einer axialen Ebene, vorzugsweise der Ebene der Trennwand 5 der vorbeschriebenen Ausführungsform, geteilt ist. Dadurch entstehen zwei Hälften (von denen in Fig. 4 bis 6 nur eine gezeigt ist), die spiegelbildlich gleich ausgebildet sein können.

Jede Hälfte 10 umfasst einen Halsbereich 11 mit einer Querschnittskonfiguration, die derjenigen des Halsbereiches 1 der vorbeschriebenen Ausführungsform nach axialer Halbierung entspricht. Jede Hälfte 10 enthält eine umfänglich geschlossene Durchgangspassage 13 sowie einen entsprechenden Teil der Anschweissrippen 14 mit Rippenbasisbereich 16 und Schweissgrat 17. Abgesehen von der axialen Halbierung können die Anschweissrippen 14 entsprechend den Anschweissrippen 4 der vorbeschriebenen Ausführungsform ausgebildet sein, so dass bezüglich weiterer Details hierauf Bezug genommen werden kann.

Jede Hälfte 10 ist mit kongruenten Mitteln, z.B. in Gestalt zueinander ausgerichteter Zapfen/Lochverbindungen, von denen nur die Zapfen 18 der einen Hälfte gezeigt sind, versehen, um die beiden Hälften lösbar miteinander zu verbinden, indem die Zapfen 18 der einen Hälfte in die betreffenden Ausfnahmelöcher (nicht gezeigt) der anderen Hälfte eingesteckt werden. Im zusammengesetzten Zustand ensteht eine Konfiguration des Ausgiess-Einschweissteiles, die im wesentlichen derjenigen nach Fig. 1 bis 3 entspricht. Auf das komplettierte Gewinde 12 der Halsbereiche 11 kann daher eine, beide Durchgangspassagen 13 verschliessende Verschlusskappe (nicht gezeigt) aufgeschraubt werden.

Die Ausführungsform der Erfindung nach Fig. 4 bis 6 ermöglicht es, an jede Hälfte 10 einen separaten Behälterteil aus Folienmaterial in der vorbeschriebenen Weise anzuschweissen oder in sonstiger Weise zu befestigen. Nach Zusammenstecken der Hälften 10 kann der Inhalt beider Behälterteile durch eine darauf ausgeübte Kraft über die Durchgangspassagen 13 ausgegeben werden, um z.B. die beiden Komponenten zur Erzielung einer gewünschten chemischen Reaktion zusammenzubringen, zu vermischen oder gleichzeitig auf ein Substrat aufzubringen.

Beim Anschweissen bewirkt die zugeführte Energie ein Aufschmelzen des dünnen Schweissgrates 7 bzw. 17, während der dickere Rippenbasisbereich 6 bzw. 16 jeder Anschweissrippe 4 bzw. 14 seine abgerundete Form an der äusseren Umfangskante im wesentlichen beibehält, so dass sich das Folienmaterial daran frei von schädlichen Kerbeffekten anlegen kann, sobald der Schweissgrat 7, 17 weggeschmolzen ist.

Vorausgehend wurde die Erfindung anhand eines Ausgiess-Einschweissteiles mit radial zur Mittellängsachse des Halsbereiches sich ertreckenden Anschweissrippen 4, 14 beschrieben. Die Anschweissrippen könnten, wenn erwünscht, auch unter einem Winkel zur Mittellängsachse liegen. Wenn erwünscht, könnte ferner der Schweissgrat 7, 17 statt sich kontinuierlich umfänglich jeder Anschweissrippe 4, 14 zu ertrecken, auch umfänglich in Abschnitte unterteilt sein. Schliesslich sind hinsichtlich der weiteren Ausgestaltung des Ausgiess-Einschweissteiles verschiedene Modifikationen möglich, die sich dem Fachmann anhand der gegebenen Lehre anbieten. Z. B. könnte die Durchgangspassage im Halsbereich des Einschweissteiles statt durch eine Schraub- oder Aufsteckkappe durch einen angeformten Deckel mit Aufreisslasche verschlossen sein. Auch könnte am Halsbereich ein Ausgiesser angeformt sein. Eine Schraub- oder Aufsteckkappe könnte am Halsbereich integral über einen Stegflansch angeformt sein und die Durchgangspassage für den Transport- und die Lagerhaltung hermetisch verschliessen. Nach Durchtrennen des Stegflansches kann die Schraub- oder Aufsteckkappe, wie üblich, zum Verschliessen der durch den Trennvorgang freigelegten Durchgangspassage verwendet werden.

## Patentansprüche

1. Kunststoff-Ausgiess-Einschweissteil zum Verbinden mit einem Kunststoff-Behälterteil, insbesondere einem Behälterteil aus folienartigem Kunststoffmaterial, mit wenigstens einer umfänglich eines eine Ausgiesspassage (3,13) definierenden Halsbereichs (1,11) sich erstreckenden Anschweissrippe (4,14), an deren äusseren Umfang ein Schweissgrat (7,17) mit Schweisskante mit einer geringeren Abmesssung in einer Richtung senkrecht zur Dickenrichtung als die des Rippenbasisbereiches vorgesehen ist, **dadurch gekennzeichnet, dass** der Schweissgrat (7,17) an einem äusseren abgerundeten Umfangsrand des Rippenbasisbereichs (6,16) angeformt ist und eine geringere Abmessung in Dickenrichtung als die des Umfangsrands hat.

2. Ausgiess-Einschweissteil nach Anspruch 1, **dadurch gekennzeichnet, dass** eine Vielzahl von Anschweissrippen (4,14) in Abstand parallel zueinander vorgesehen ist.

3. Ausgiess-Einschweissteil nach Anspruch 2, **dadurch gekennzeichnet, dass** zwischen benachbarten Anschweissrippen (4,14) eine vom Halsbereich (1,11) abstehende Trennwand (5,15) angeformt ist.

4. Ausgiess-Einschweissteil nach einem der vorhergehenden Ansprüche, **dadurch gekennzeichnet, dass** jede Anschweissrippe (4,14) diametral gegenüberliegende in Draufsicht im wesentlichen keilförmig verlaufende Abschnitte (A, B) hat.

5. Ausgiess-Einschweissteil nach einem der vorhergehenden Ansprüche, **dadurch gekennzeichnet, dass** das Verhältnis der Dicke des Schweissgrates (7,17) zur Dicke des Rippenbasisbereiches (6,16) etwa 1:3 bis etwa 1:10, vorzugsweise etwa 1:5, beträgt.

6. Ausgiess-Einschweissteil nach einem der vorhergehenden Ansprüche, **dadurch gekennzeichnet, dass** dieses längs einer axialen Ebene, insbesondere axialen Mittelebene, geteilt ist, und dass jedes Teilstück (10) eine Ausgiesspassage (13) aufweist.

7. Ausgiess-Einschweissteil nach Anspruch 6, **dadurch gekennzeichnet, dass** die Teilstücke (10) miteinander verbindbar sind, um die Konfiguration für einen Halsbereich zu komplettieren, auf den eine Verschlusskappe zum Verschliessen beider Ausgiesspassagen (13) der Teilstücke befestigbar ist.

## Claims

1. A plastic weld pourer component for connecting to a plastics container part, in particular to a plastics container part made of film-like plastics material, including at least a single welding rib (4,14) extending circumferentially about a neck portion (1,11) defining a discharge passage (3,13), and having a welding flash (7,17) formed on the outer periphery thereof, said welding flash having a welding edge having a smaller dimension in a direction perpendicular to the thickness direction than that of a rib base portion, **characterized in that** said welding flash (7,17) is formed on a rounded outer circumferential face of said rib base portion (6,16) and has a smaller dimension in the thickness direction than that of the outer circumferential face.

2. The weld pourer component as set forth in claim 1, **characterized in that** a plurality of welding ribs (4,14) is provided parallel to and spaced from each other.

3. The weld pourer component as set forth in claim 2, **characterized in that** between adjacent welding ribs (4,14) a partition wall (1,11) is formed, said partition wall extends from said neck portion (1,11).

4. The weld pourer component as set forth in one of the preceding claims, **characterized in that** each welding rib (4,14) has diametrally opposed sections (A,B) substantially wedge-shaped in configuration, when viewed from above,.

5. The weld pourer component as set forth in one of the preceding claims, **characterized in that** the ratio of the thickness of the welding flash (7,17) relative to the thickness of the rib base portion (6,16) is between approximately 1:3 and approximately 1:10, preferably approximately 1:5.

6. The weld pourer component as set forth in one of the preceding claims, **characterized in that** it is divided along an axial plane, in particular an axial center plane, and that each separate part (10) includes a discharge passage (13).

7. The weld pourer component as set forth in claim 7, **characterized in that** the separate parts (10) are connectable to each other to complete the configuration of a neck portion to which a closure cap for sealing both discharge passages (13) of the separate parts can be mounted.

## Revendications

1. Pièce verseuse à souder destinée à être reliée à une partie de récipient en matière synthétique, en particulier une partie de récipient en matière synthétique sous forme de feuille, comprenant au moins une nervure de soudage (4, 14) s'étendant autour d'une zone de col (1, 11) définissant un passage de versement (3, 13) sur la périphérie extérieure de laquelle est prévue une bavure de soudage (7, 17) avec bord de soudage présentant dans une direction perpendiculaire à la direction de l'épaisseur une dimension plus faible que la zone de base des nervures, **caractérisée en ce que** la bavure de soudage (7, 17) est formée sur un bord périphérique extérieur arrondi de la zone de base des nervures (6, 16) et présente dans la direction de l'épaisseur une dimension plus faible que celle du bord périphérique.

2. Pièce verseuse à souder selon la revendication 1, **caractérisée par** une pluralité de nervures de soudage (4, 14) espacées parallèlement les unes par rapport aux autres.

3. Pièce verseuse à souder selon la revendication 2, **caractérisée en ce qu'**une paroi de séparation (5, 15) partant de la zone de col (1, 11) est formée entre des nervures de soudage voisines (4, 14).

4. Pièce verseuse à souder selon l'une quelconque des revendications précédentes, **caractérisée en ce que** chaque nervure de soudage (4, 14) possède des portions diamétralement opposées en vue de dessus s'étendant essentiellement en forme de coins (A, B).

5. Pièce verseuse à souder selon l'une quelconque des revendications précédentes, **caractérisée en ce que** le rapport de l'épaisseur de la bavure de soudage (7, 17) à l'épaisseur de la zone de base (6, 16) est d'environ 1:3 à environ 1:10, de préférence d'environ 1:5.

6. Pièce verseuse à souder selon l'une quelconque des revendications précédentes, **caractérisée en ce que** celle-ci est divisée suivant un plan axial, en particulier un plan médian axial, et **en ce que** chaque partie de pièce (10) présente un passage de versement (13).

7. Pièce verseuse à souder selon la revendication 6, **caractérisée en ce que** les parties de pièce (10) peuvent être raccordées ensemble pour compléter la configuration pour une zone de col sur lequel peut être fixé un capuchon de fermeture servant à fermer les deux passages de remplissage (13) des parties de pièce.
